# EUROPEAN PATENT SPECIFICATION

(11) **EP 0 545 580 B1**
(45) Date of publication and mention of the grant of the patent: **15.10.1997**
(21) Application number: 92310562.1
(22) Date of filing: 19.11.1992
(51) Int. Cl.: G06K 19/10, G06K 7/00

(54) **Portable storage and portable storage verifying device and method**
Tragbarer Speicher, und Verfahren und Vorrichtung zu dessen Prüfung
Dispositif de mémorisation portable, et procédé et dispositif pour sa vérification

(30) Priority: 05.12.1991 JP 321936/91
(43) Date of publication of application: 09.06.1993
(73) Proprietor: MITSUBISHI DENKI KABUSHIKI KAISHA, Chiyoda-ku Tokyo (JP)
(72) Inventor: Masada, Shigeo, c/o Mitsubishi Denki K.K., Itami-shi, Hyogo-ken (JP)
(74) Representative: Hackett, Sean James

(56) References cited:
- EP-A- 0 239 061
- EP-A- 0 344 742
- WO-A-88/08172
- FR-A- 2 401 465
- FR-A- 2 600 799
- US-A- 4 443 027

## Description

### BACKGROUND OF THE INVENTION

### FIELD OF THE INVENTION:

The present invention relates to a portable storage, and more particularly to the construction of a portable storage such as an IC card. The present invention also relates to a device and a method for verifying genuineness of the portable storage.

### DESCRIPTION OF THE RELATED ART:

Magnetic cards utilizing the magnetic storage method have been conventionally used in a system in which users bear portable storages such as cash cards for banks or member cards for various organizations, by way of example, and employ them to verify or confirm a variety of transactions or conducts. Recently, however, there have been invented and put into practice IC cards each comprising a semiconductor memory built in a plastic card. It is also proposed to use those IC cards as tags to verify things other than persons.

Such an IC card utilizing a semiconductor memory is more complicated in manufacture process than magnetic cards, and the International Standard Organization is making efforts to develop standardization as ISO standards for the purpose of ensuring security in manufacture and distribution processes. In their efforts, various processes of a card life cycle, such as a manufacture process of semiconductor chips, a module manufacture process for making up the semiconductor chip into a module, a card manufacture process for fabricating the module into the form of a card, a process of trading cards, a transaction process using the cards, and a process of verifying a card owner, are studied as themes to be solved.

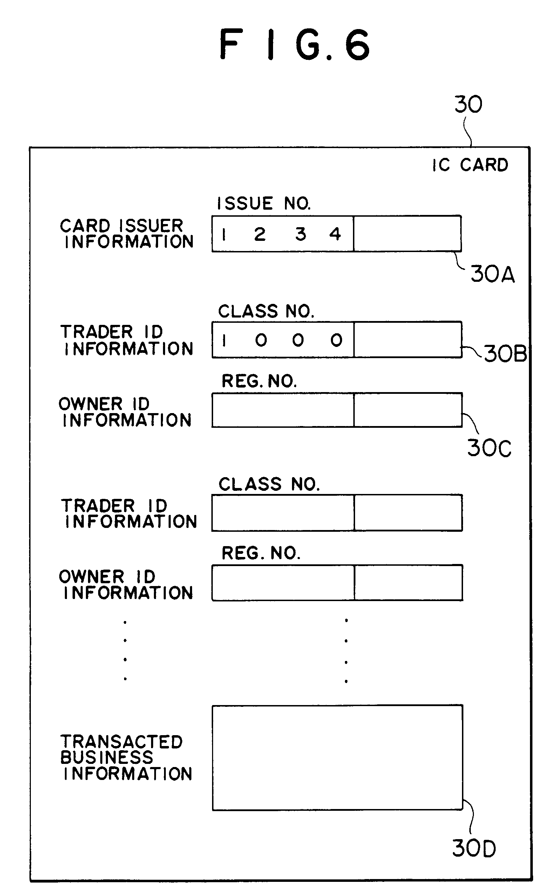

As one method of ensuring security in the above card life cycle, Japanese Patent Laid-Open No. 62-274464 proposes a verification device. Principles of this verification device is shown in Fig. 6. An IC card 30 has four memory areas set to respectively store card issuer information 30A representing an issuer of the card, trader identifying (ID) information 30B representing a trader, an owner ID information 30C representing a card owner, and transaction business information 30D representing history of transactions conducted between the card owner and traders.

In transacting business, when the card owner inserts the IC card 30 into an external unit, the external unit makes verification of the card in accordance with the preset verification sequence. First, the card issuer information 30A in the IC card 30 is compared with the information stored in the external unit. Next, if both data of information are in match with each other, then the trader ID information 30B is collated.

The card issuer information 30A is stored as only one piece of data in the IC card 30 and, to discern the IC card 30 from other cards and other issuers, comprises information like a password consisted of an issue number assigned thereto and an item which can be set only by the issuer. The trader ID information 30B is present plural in number in the IC card 30 and contains a classification number representing a category of business and a password specific to the trader. The card owner is identified and registered in association with individual traders, and the owner ID information 30C is stored in the IC card 30 in one-to-one relation to each trader ID information 30B. In the process of verifying the card in the external unit, if the trader ID information 30B is matched with the information in the external unit, then the card owner himself or herself is confirmed based on the owner ID information 30C.

With the conventional verification method, however, the contents stored in the card memory can be confirmed, but the card itself cannot be verified. This raises a problem that by storing the memory contents of the genuine card in any other card, the card could be forged.

Further, because verifying the card necessitates a verification device, such as given by an external unit, which is capable of reading the memory contents for confirmation, the card owner have difficulties in easily confirming whether the card to be used is genuine or not by himself or herself, meaning that the right of the card owner for the result of transaction cannot be ensured.

US Patent No. 4874934 describes an IC card which has information stored in a memory and also embossed on a surface of the card.

### SUMMARY OF THE INVENTION

The present invention has been achieved to solve the above-mentioned problems in the prior art, and its object is to provide a portable storage device which cannot be forged with ease and can be visually verified without using a verification device.

Another object of the present invention is to provide a verification device and a verification method by which such a portable storage can be verified with a high degree of reliability.

A portable storage device according to the present invention comprises a device body containing issuer related information and owner related information visually indicated on a surface of the device body, the device body accommodating a semiconductor memory and processing means, the semiconductor memory containing at least issuer information representing an issuer and owner information representing an owner which issuer information and owner information has a predetermined correlation with the issuer related information and the owner related information respectively, characterized in that the processing means comprises means for processing the issuer related information and the owner related information with the predetermined correlation to provide the issuer information and owner information.

Also, a verification device according to the present invention comprises read means for electrically reading issuer information and owner information both stored in a semiconductor memory inside a portable storage device, characterized by decoding means for processing the issuer information and the owner information by a predetermined correlation to provide decoded issuer information and decoded owner information, detection means for optically reading issuer related information and owner related information both visually indicated on a surface of a device body of said portable storage device and respectively related to the issuer information and the owner information in said semiconductor memory, verification means for comparing the issuer information and the owner information read by said read means and decoded by said decoding means with the issuer related information and the owner related information read by said detection means for collation, respectively, to verify said portable storage device, and output means for outputting a result of verification made by said verification means.

Furthermore, a verification method according to the present invention comprises reading issuer information and owner information both stored in a semiconductor memory inside a portable storage device, characterized by decoding the issuer information and the owner information by a predetermined correlation to provide decoded issuer information and decoded owner information, optically reading, with a detection means, issuer related information and owner related information both visually indicated on a surface of a device body of said portable storage device and respectively related to the issuer information and the owner information in said semiconductor memory, and comparing, with a verification means, the issuer information and the owner information read and decoded in said steps with the issuer related information and the owner related information read in said step for collation.

In the portable storage device according to the present invention, the issuer related information and the owner related information related to the issuer information and the owner information in the semiconductor memory, respectively, are visually indicated on the surface of the device body. The issuer information and the owner information have a predetermined correlation with the issuer related information and the owner information respectively.

Also, in the verification device according to an embodiment of the present invention, the read means and the decode means electrically read and decode the issuer information and the owner information both stored in the semiconductor memory inside the portable storage, the detection means optically reads the issuer related information and the owner related information both visually indicated on the surface of the device body of the portable storage, and the verification means compares the issuer information and the owner information read by the read means and decoded by the decoding means with the issuer related information and the owner related information read by the detection means for collation.

Furthermore, in the verification method according to the present invention, the issuer information and the owner information both stored in the semiconductor memory inside the portable storage device, as well as the reading issuer related information and the owner related information both visually indicated on the surface of the device body of the portable storage are respectively read and compared with each other for allocation.

### BRIEF DESCRIPTION OF THE DRAWINGS

Fig. 1 is top plan view showing an IC card according to one embodiment of the present invention,
Fig. 2 is a diagram showing an internal configuration of a semiconductor memory used in the embodiment,
Fig. 3 is a block diagram showing a writing device for storing information in the IC card of the embodiment,
Fig. 4 is a block diagram showing a verification device for verifying information in the IC card of the embodiment,
Fig. 5 is a flowchart showing operation of the verification device of Fig. 4, and
Fig. 6 is a diagram showing the contents stored in a memory of a conventional IC card.

### DESCRIPTION OF THE PREFERRED EMBODIMENTS

Hereinafter, an embodiment of the present invention will be described with reference to the accompanying drawings.

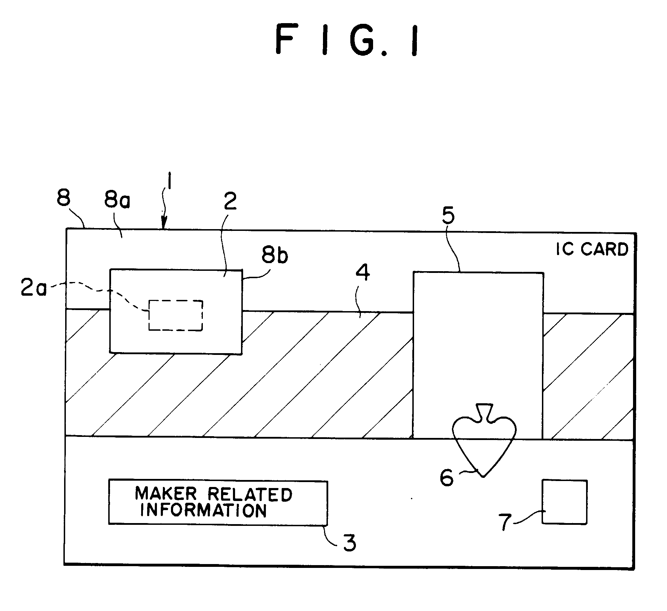

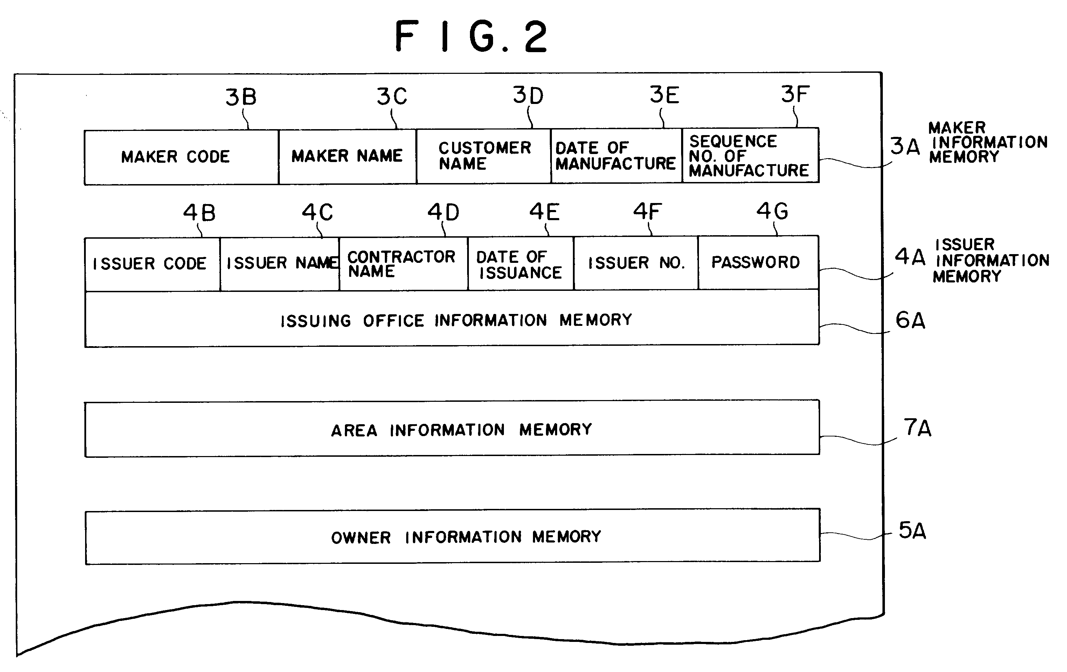

Fig. 1 shows an IC card according to one embodiment of the present invention. An IC card 1 is formed of resin material with a thickness of about 1 mm, and comprises a card body 8 doubling as a device body and a semiconductor memory module 2 which is built in a recess 8b formed in a surface 8a of the card body 8. The semiconductor memory module 2 incorporates a semiconductor memory 2a and fixed in the recess 8b by an adhesive. On the surface 8a of the card body 8, there are visibly indicated maker related information 3 representing information related to a card maker by symbols, issuer related information 4 representing a card issuer by an underlying pattern, owner related information 5 representing an owner of the card by a photograph, an issuing office stamp 6 representing an issuing office from which the card has been issued, and an area stamp 7 representing an effective area of the card by colors. Also, as shown in Fig. 2, the semiconductor memory 2a comprises a maker information memory 3A, an issuer information memory 4A, an owner information memory 5A, an issuing office information memory 6A, and an area information memory 7A.

The card maker builds the semiconductor memory module 2 in the card body 8 which is plain, i.e., has no prints, stamps or embossments, etc. applied onto the surface, and writes the maker information representing themselves in the maker information memory 3A of the semiconductor memory 2a built in the module 2. The maker information contains a maker code 3B, a maker name 3C, a customer name 3D, a date of manufacture 3E and a sequence number of manufacture 3F, and is written in the memory by a writing device equipped on the maker side.

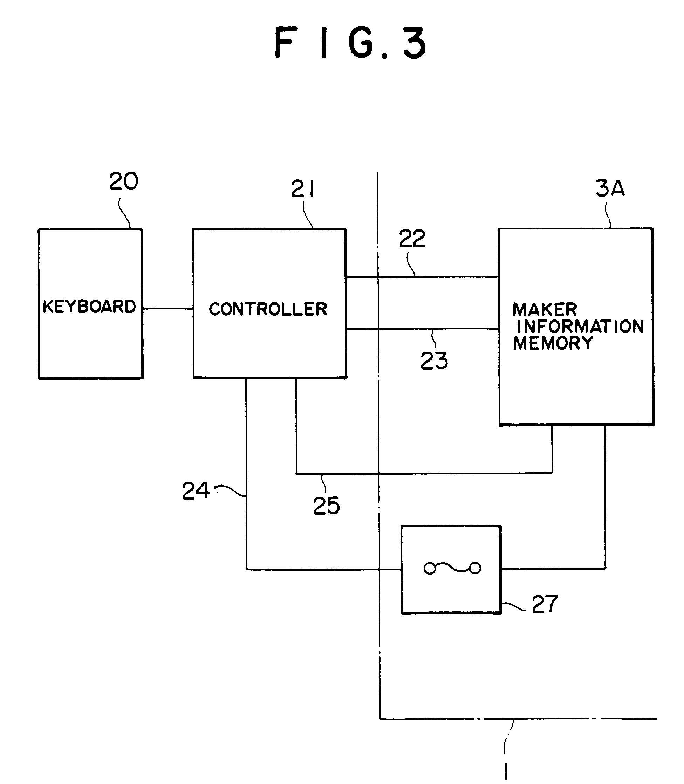

Here, one example of the writing device is shown in Fig. 3. A keyboard 20 is connected to a controller 21 which is in turn connected to the maker information memory 3A of the IC card 1 via an address line 22, a data line 23 and a read control line 25. The IC card 1 includes an immediately burn-out fuse 27 connected to the maker information memory 3A, and the controller 21 is connected to the fuse 27 via a write control line 24. By the maker entering the data to be written and the address and, simultaneously, accessing to the write control line 24 via the controller 21, the maker information is written into the maker information memory 3A. After the maker information has been all written in this way, the fuse 27 is burn out by momentarily passing a large current through the write control line 24. As a result, the maker information memory 3A and the write control line 24 are disconnected from each other and, thereafter, any information can not be written into the IC card. In other words, rewriting of the maker information is prevented. It should be noted that rewriting of the maker information may also be easily prevented by software.

Further, the maker indicates, as the maker related information 3, those data relating the maker to the card orderer among the maker information, such as the maker, the customer and the date of manufacture, on the surface 8a of the card body 8 using symbols such as numerals. This enables the contents of the maker information to be confirmed visually. The maker related information 3 can be indicated on the surface 8a of the card body 8 by printing, stamping or embossing.

After that, the IC card 1 is delivered to an issuer to take a step for issuance. The issuer writes the issuer information identifying themselves into the issuer information memory 4A of the semiconductor memory 2a. The issuer information contains an issuer code 4B, an issuer name 4C, a contractor name 4D, a date of issuance 4E, an issue number 4F and a password 4G. These data of the issuer information require that they cannot be easily read and rewritten by the third party. For the reason, this embodiment employs the password scheme. More specifically, only when the password entered from an external unit is in match with the password 4G stored in the issuer information memory 4A of the semiconductor memory 2a, the data stored in other areas of the issuer information memory 4A can be read and any desired data can be written into those other areas. The password 4G may be formed by, for example, binary data or the like of the trade name representing the issuer. In addition, the issuer prints, as the issuer related information 4, an underlying pattern which is set with trade marks representing the issuer, on the surface 8a of the card body 8 of the IC card 1. This enables the owner of the IC card 1 to visually recognize the issuer by himself or herself.

A person who is going to own the card submits his or her own photograph to the issuer for getting issuance of the card. The issuer stores, as the owner information, the address, name and the password number of the card owner in the owner information memory 5A of the semiconductor memory 2a and also prints, as the owner related information 5, a his or her own photograph on the surface 8a of the card body 8.

Where the cards are practically issued for each of plural areas because of a large scale of the issuer, or where utilization of the cards is limited to a certain area, local issuing offices under contract with the issuer for respective areas may issue the cards. In such a case, writing of the owner information to the semiconductor memory 2a and printing of the owner related information 5 on the surface 8a are carried out by each of the issuing offices. Further, the issuing office writes issuing office information identifying themselves into the issuing office information memory 6A of the semiconductor memory 2a and also affixes the issuing office stamp 6 identifying themselves on the surface 8a of the card body 8. The issuing office stamp 6 may be affixed in overlapped relation to the owner's photograph which has been printed as the owner related information 5. Additionally, the issuing office writes area information indicating the effective area into the area information memory 7A of the semiconductor memory 2a and also prints the area stamp 7 in the color representing that effective area on the surface 8a of the card body 8.

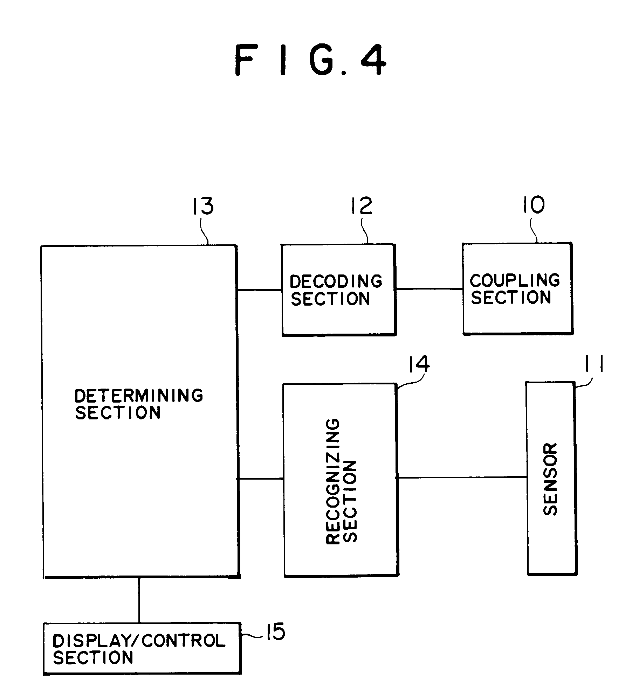

Here, a verification device for verifying the IC card 1 is shown in Fig. 4. A determining section 13 is connected via a decoding section 12 to a coupling section 10 which is mechanically and electrically coupled to the IC card 1. In the vicinity of the coupling section 10, there is disposed a sensor 11 to which the determining section 13 is also connected via a recognizing section 14. Furthermore, a display/-control section 15 is connected to the determining section 13. The coupling section 10 reads the information stored in the semiconductor memory 2a of the IC card 1, and the decoding section 12 decodes the information read by the coupling section 10. The coupling section 10 and the decoding section 12 cooperatively constitute read means. The sensor 11 optically detects the information on the surface 8a of the card body 8 of the IC card 1, and the recognizing section 14 reads and recognizes respective data of the information based on detected signals from the sensor 11. The sensor 11 and the recognizing section 14 cooperatively constitute detection means. The determining section 13 constitutes verification means and determines the correlation between the information inputted from the decoding section 12 and the information inputted from the recognizing section 14. The display/control section 15 carries out processing of transactions and so forth with respect to the IC card 1 based on the determination result made by the determining section 13.

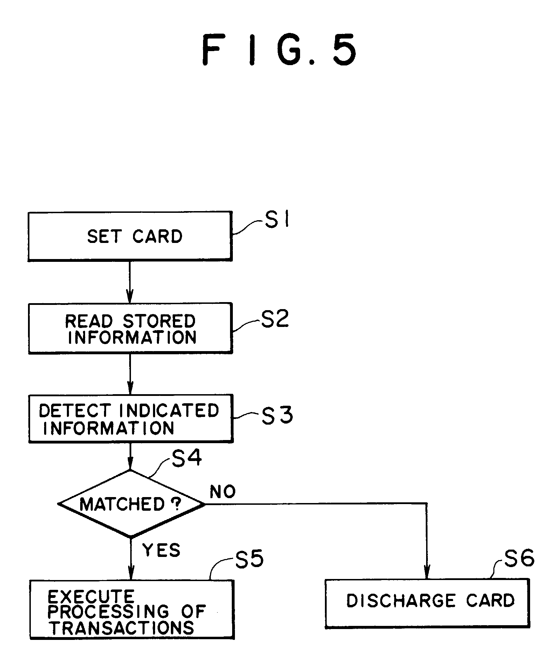

Operation of the verification device thus arranged will now be described with reference to a flowchart of Fig. 5. First, when the IC card 1 is set into the coupling section 10 in a step S1, the coupling section 10 reads various data of the information stored in the semiconductor memory 2a of the IC card 1 in a step S2, following which the decoding section 12 decodes contents of the information read by the coupling section 10. In a step S3, the sensor 11 optically detects the pattern, figure, rugged configuration and hue on the surface 8a of the IC card 1 and, based on the detected signals from the sensor 11, the recognizing section 14 recognizes various data of the information indicated on the surface 8a. The correlation between the information in the semiconductor memory 2a decoded by the decoding section 12 and the information on the surface 8a recognized by the recognizing section 14 is determined by the determining section 13 in a step S4. If it is determined that the contents of both the information are in match with each other, then the control flow goes to a step S5 in which the display/control section 15 carries out processing of transactions and so forth. On the other hand, if it is determined in the step S4 that the contents of both the information are different from each other, then incapability of transactions is concluded and the control flow goes to a step S6 in which the IC card 1 set in the coupling section 10 is discharged out of the coupling section 10.

In addition, it is also possible to take a photograph of the card user by using a video camera or the like and compare it with the photograph printed a the owner related information 5 on the surface 8a of the IC card 1 for thereby supporting the determination of the owner information.

Alternatively, instead of indicating the information to be stored in the semiconductor memory 2a on the surface 8a of the card body 8 as it is, the information may be once processed with predetermined correlation, followed by indicating the processed information on the surface 8a. This provides the IC card which is more difficult to be forged. On the contrary, the information indicated on the surface 8a of the card body 8 may be processed and stored in the semiconductor memory 2a. Means for processing the information can be provided in any of the IC card itself and the external unit. If the processing means is provided in the IC card itself, the external unit can be economically realized with simple construction. If the processing means is provided in the external unit, the difficulty in forging the IC card is increased and hence reliability of verification is improved.

Indicating the information on the surface 8a of the card body 8 may also be performed by laminating or impregnating physical or chemical substances in the resin making up the card body 8, other than printing, stamping or embossing. For example, information can be indicated by forming the card body 8 impregnated with such substances as to deform or degenerate upon irradiation of special light, e.g., a laser beam, and then irradiating the special light to deform the surface 8a of the card body 8. As an alternative, it is further possible to incorporate a magnetic material in the resin and magnetize the magnetic material, thereby storing information in the card body 8. After indicating the information on the surface 8a of the card body 8 by any of printing, stamping or embossing, degeneration and deformation, the surface 8a may be covered with a transparent protective layer. Additionally, indicating the maker, the issuer and so forth on the rear surface of the semiconductor memory module 2 is effective in further improving security and preventing forgery of the cards.

If the contents indicated on the card body 8 are figured with the aid of figures and colors, this is effective in that operators engaged in issuing the cards in the issuing offices or operators being present in transactions confirm the cards. As additional owner related information indicated on the card body 8, it is possible to, by way of example, indicate sex by the present or absence of a red line, or indicate the ranges of age by changing colors in a certain region on the surface 8a of the card body 8. This helps the operators easily recognize the card owners. Plural issuers and/or issuing offices may be stored and indicated in and on a single card, which contributes to an improved degree of verification.

## Claims

1. A portable storage device (1) comprising:
a device body (8) containing issuer related information (4) and owner related information (5) visually indicated on a surface (8a) of the device body, the device body accommodating a semiconductor memory (2a) and processing means,
the semiconductor memory (2a) containing at least issuer information (4A) representing an issuer and owner information (5A) representing an owner which issuer information (4A) and owner information (5A) has a predetermined correlation with the issuer related information (4) and the owner related information (5) respectively, characterized in that the processing means comprises means for processing the issuer related information (4) and the owner related information (5) with the predetermined correlation to provide the issuer information (4A) and owner information (5A).

2. A storage device (1) according to claim 1, wherein the issuer related information (4) and the owner related information (5) on said device body (8) are visually indicated by using any of symbols, figures, photographs, colors, stamps and embossments.

3. A storage device (1) according to claim 1 or claim 2, wherein said device body (8) contains maker related information (3) related to maker information (3a) in said semiconductor memory (2a) and visually indicated.

4. A storage device (1) according to claim 3, wherein the maker related information (3) on said device body (8) is visually indicated by using any of symbols, figures, photographs, colors, stamps and embossments.

5. A storage device (1) according to any one of claims 1 to 4, wherein said semiconductor memory (2a) stores issuing office information (6A) representing an issuing office, and issuing office related information (6) related to the issuing office information (6A) is visually indicated on the surface (8a) of said device body.

6. A storage device (1) according to any one of claims 1 to 5, wherein said semiconductor memory (2a) stores area information (7A) representing an effective area of said storage device, and area related information (7) related to the area information (7A) is visually indicated on the surface (8a) of said device body (8).

7. A verification device comprising:
read means (10) for electrically reading issuer information (4A) and owner information (5A) both stored in a semiconductor memory (2a) inside a portable storage device (1),
characterized by:
decoding means (12) for processing the issuer information (4A) and the owner information (5A) by a predetermined correlation to provide decoded issuer information and decoded owner information,
detection means (11,14) for optically reading issuer related information (4) and owner related information (5) both visually indicated on a surface (8a) of a device body (8) of said portable storage device (1) and respectively related to the issuer information (4A) and the owner information (5A) in said semiconductor memory (2a),
verification means (13) for comparing the issuer information (4A) and the owner information (5A) read by said read means (10) and decoded by said decoding means (12) with the issuer related information (4) and the owner related information (5) read by said detection means (11, 14) for collation, respectively, to verify said portable storage device, and
output means (15) for outputting a result of verification made by said verification means.

8. A verification method comprising the steps of:
reading (10) issuer information (4A) and owner information (5A) both stored in a semiconductor memory (2a) inside a portable storage device (1),
characterized by the following steps:
decoding (12) the issuer information (4A) and the owner information (5A) by a predetermined correlation to provide decoded issuer information and decoded owner information,
optically reading (11, 14), with a detection means (11, 14), issuer related information (4) and owner related information (5) both visually indicated on a surface (8a) of a device body (8) of said portable storage device and respectively related to the issuer information (4A) and the owner information (5A) in said semiconductor memory (2a), and
comparing, with a verification means (13), the issuer information (4A) and the owner information (5A) read and decoded in said steps with the issuer related information (4) and the owner related information (5) read in said step for collation.

## Patentansprüche

1. Tragbare Speichervorrichtung (1) mit:
einem Vorrichtungskörper (8), welcher eine auf einen Aussteller bezogene Information (4) und eine auf einen Eigentümer bezogene Information (5) enthält, welche visuell auf einer Oberfläche (8a) des Vorrichtungskörpers angezeigt werden, wobei der Vorrichtungskörper mit einem Halbleiterspeicher (2a) und einer Verarbeitungseinrichtung versehen ist,
wobei der Halbleiterspeicher (2a) wenigstens eine Ausstellerinformation (4A), welche einen Aussteller repräsentiert, und eine Eigentümerinformation (5A), welche einen Eigentümer repräsentiert, enthält, wobei die Ausstellerinformation (4A) und die Eigentümerinformation (5A) eine vorbestimmte Korrelation zu der auf den Aussteller bezognenen Information (4) bzw. der auf den Eigentümer bezogenen Information (5) aufweisen,
dadurch gekennzeichnet, daß
die Verarbeitungseinrichtung eine Einrichtung zum Verarbeiten der auf den Aussteller bezogenen Information (4) und der auf den Eigentümer bezogenen Information (5) bezüglich der vorbestimmten Korrelation aufweist, um die Ausstellerinformation (4A) und die Eigentümerinformation (5A) bereitzustellen.

2. Speichervorrichtung (1) nach Anspruch 1, dadurch gekennzeichnet, daß die auf den Aussteller bezogene Information (4) und die auf den Eigentümer bezogene Information (5) visuell auf dem Vorrichtungskörper (8) unter Verwendung irgendwelcher Symbole, Figuren, Fotos, Farben, Marken und Einprägungen angezeigt werden.

3. Speichervorrichtung (1) nach Anspruch 1 oder 2, dadurch gekennzeichnet, daß der Vorrichtungskörper (8) eine auf einen Hersteller bezogene Information (3) enthält, welche auf die Herstellerinformation (3a) in dem Halbleiterspeicher (2a) bezogen ist und visuell angezeigt wird.

4. Speichervorrichtung (1) nach Anspruch 3, dadurch gekennzeichnet, daß die auf den Hersteller bezogene Information (3) visuell auf dem Vorrichtungskörper (8) unter Verwendung irgendwelcher Symbole, Figuren, Fotos, Farben, Marken und Einprägungen angezeigt wird.

5. Speichervorrichtung (1) nach einem der Ansprüche 1 bis 4, dadurch gekennzeichnet, daß der Halbleiterspeicher (2a) eine Ausstellungsbüroinformation (6A), welche ein Ausstellungsbüro repräsentiert, speichert und die auf das Ausstellungsbüro bezogene Information (6), welche auf die Ausstellungsbüroinformation (6A) bezogen ist, visuell auf der Oberfläche (8a) des Vorrichtungskörpers angezeigt wird.

6. Speichervorrichtung (1) nach einem der Ansprüche 1 bis 5, dadurch gekennzeichnet, daß der Hableiterspeicher (2a) eine Bereichsinformation (7A), welche einen effektiven Bereich der Speichervorrichtung repräsentiert, speichert und eine auf den Bereich bezogene Information (7), welche auf die Bereichsinformation (7A) bezogen ist, visuell auf der Oberfläche (8a) des Vorrichtungskörpers (8) angezeigt wird.

7. Prüfvorrichtung mit:
einer Leseeinrichtung (10) zum elektrischen Lesen einer Ausstellerinformation (4A) und einer Eigentümerinformation (5A), welche beide in einem Halbleiterspeicher (2a) innerhalb einer tragbaren Speichervorrichtung (1) gespeichert sind,
gekennzeichnet durch:
eine Dekodiereinrichtung (12) zum Verarbeiten der Ausstellerinformation (4A) und der Eigentümerinformation (5A) durch eine vorbestimmte Korrelation, um eine dekodierte Ausstellerinformation und eine dekodierte Eigentümerinformation bereitzustellen,
eine Erfassungseinrichtung (11, 14) zum optischen Lesen der auf den Aussteller bezogenen Information (4) und der auf den Eigentümer bezogenen Information (5), welche beide visuell auf einer Oberfläche (8a) eines Vorrichtungskörpers (8) der tragbaren Speichervorrichtung (1) angezeigt werden und auf die Ausstellerinformation (4A) bzw. die Eigentümerinformation (5A) in dem Halbleiterspeicher (2a) bezogen sind,
eine Prüfeinrichtung (13) zum Vergleichen der Ausstellerinformation (4A) und der Eigentümerinformation (5A), welche von der Leseeinrichtung (10) gelesen werden und von der Dekodiereinrichtung (12) dekodiert werden, mit der auf den Aussteller bezogenen Information (4) und der auf den Eigentümer bezogenen Information (5), welche durch die Erfassungseinrichtung (11, 14) zur Prüfung jeweils gelesen werden, um die tragbare Speichervorrichtung zu prüfen, und
eine Ausgabeeinrichtung (15) zum Ausgeben eines von der Prüfeinrichtung erstellten Ergebnisses der Prüfung.

8. Prüfverfahren mit den Schritten:
Lesen (10) einer Ausstellerinformation (4A) und einer Eigentümerinformation (5A), welche beide in einem Halbleiterspeicher (2a) innerhalb einer tragbaren Speichervorrichtung (1) gespeichert werden,
gekennzeichnet durch die folgenden Schritte:
Dekodieren (12) der Ausstellerinformation (4A) und der Eigentümerinformation (5A) durch eine vorbestimmte Korrelation, um eine dekodierte Ausstellerinformation und eine dekodierte Eigentümerinformation bereitzustellen,
optisches Lesen (11, 14) mit einer Erfassungseinrichtung (11, 14) einer auf den Aussteller bezogenen Information (4) und einer auf den Eigentümer bezogenen Information (5), welche beide visuell auf einer Oberfläche (8a) des Vorrichtungskörpers (8) der tragbaren Speichervorrichtung angezeigt werden und auf die Ausstellerinformation (4A) bzw. die Eigentümerinformation (5A) in dem Halbleiterspeicher (2a) bezogen sind, und
Vergleichen mit einer Prüfeinrichtung (13) der Ausstellerinformation (4A) und der Eigentümerinformation (5A), welche in den Schritten gelesen und dekodiert werden, mit der auf den Aussteller bezogenen Information (4) und der auf den Eigentümer bezogenen Information (5), welche in dem Schritt der Prüfung gelesen werden.

## Revendications

1. Dispositif de mémorisation portable (1) comprenant:
un corps du dispositif (8) contenant une information concernant un émetteur (4) et une information concernant un titulaire (5) visuellement indiquées sur une surface (8a) du corps du dispositif, le corps du dispositif recevant une mémoire à semi-conducteur (2a) et un moyen de traîtement,
la mémoire à semi-conducteur (2a) contenant au moins une information d'un émetteur (5A) représentant un émetteur et une information de titulaire (5A) représentant un titulaire lesquelles information d'émetteur (4A) et information de titulaire (5A) ont une corrélation prédéterminée respectivement avec l'information concernant un émetteur (4) et l'information concernant un titulaire (5),
caractérisé en ce que le moyen de traîtement comprend un moyen pour traîter l'information concernant l'émetteur (4) et l'information concernant le titulaire (5) avec la corrélation prédéterminée pour fournir l'information d'émetteur (4A) et l'information du titulaire (5A).

2. Dispositif de mémorisation (1) selon la revendication 1, dans lequel l'information concernant l'émetteur (4) et l'information concernant le titulaire (5) sur le corps du dispositif précité (8) sont visuellement indiquées en utilisant n'importe lequel des symbôles, figures, photographies, couleurs, impressions et emboutis.

3. Dispositif de mémorisation (1) selon la revendication 1 ou la revendication 2, dans lequel le corps du dispositif précité (8) contient une information concernant un fabricant (3) en rapport à une information de fabricant (3a) dans la mémoire à semi-conducteur précitée (2a) et visuellement indiquée.

4. Dispositif de mémorisation (1) selon la revendication 3, dans lequel l'information concernant un fabricant (3) sur le corps du dispositif précité (8) est visuellement indiquée en utilisant n'importe lequel des symboles, figures, photographies, couleurs, impressions et emboutis.

5. Dispositif de mémorisation (1) selon l'une quelconque des revendications 1 à 4, dans lequel la mémoire à semi-conducteur précitée (2a) mémorise une information d'un bureau d'émission (6A) représentant un bureau d'émission et une information concernant un bureau d'émission (6) concernant l'information du bureau d'émission (6A) et visuellement indiquées sur la surface (8a) du corps du dispositif précité.

6. Dispositif de mémorisation (1) selon l'une quelconque des revendications 1 à 5, dans lequel la mémoire à semi-conducteur précitée (2a) mémorise une information de zone (7A) représentant une zone effective du dispositif de mémorisation et une information concernant une zone (7) en rapport à l'information de zone (7A) est visuellement indiquée sur la surface (8a) du corps du dipositif (8).

7. Dispositif de vérification comprenant:
un moyen de lecture (10) pour lire électriquement une information d'un émetteur (4A) et une information d'un titulaire (5A) toutes les deux mémorisées dans une mémoire à semi-conducteur (2a) à l'intérieur d'un dispositif de mémoire portable (1),
caractérisé par:
un moyen de décodage (2) pour traîter l'information de l'émetteur (4A) et l'information du titulaire (5A) par une corrélation prédéterminée pour fournir une information d'émetteur décodée et une information de titulaire décodée,
un moyen de détection (11, 14) pour optiquement lire une information en rapport à un émetteur (4) et une information en rapport à un titulaire (5) toutes les deux visuellement indiquées sur une surface (8a) d'un corps du dispositif (8) dudit dispositif de mémorisation portable (1) et respectivement en rapport à l'information de l'émetteur (4A) et l'information du titulaire (5A) dans ladite mémoire à semi-conducteur (2a),
un moyen de vérification (13) pour comparer l'information de l'émetteur (4A) et l'information du titulaire (5A) lues par ledit moyen de lecture (10) et décodées par ledit moyen de décodage (12) respectivement à l'information en rapport à l'émetteur (4) et l'information en rapport au titulaire (5) lues par ledit moyen de détection (11, 14) pour confrontation pour vérifier ledit dispositif de mémorisation portable, et
un moyen de sortie (15) pour produire un résultat de vérification effectuée par ledit moyen de vérification.

8. Procédé de vérification comprenant les étapes de : lire (10) une information d'un émetteur (4A) et une information d'un titulaire (5A) toutes les deux mémorisées dans une mémoire à semi-conducteur (2a) à l'intérieur d'un dispositif de mémorisation portable (1),
caractérisé par les étapes suivantes:
décoder (12) l'information de l'émetteur (4A) et l'information du titulaire (5A) par une corrélation prédéterminée pour fournir une information d'émetteur décodée et une information de titulaire décodée,
optiquement lire (11, 14), par un moyen de détection (11, 14), une information en rapport à un émetteur (4) et une information en rapport à un titulaire (5) toutes les deux visuellement indiquées sur une surface (8a) d'un corps de dispositif (8) dudit dispositif de mémorisation portable et respectivement en rapport à l'information de l'émetteur (4A) et l'information du titulaire (5A) dans ladite mémoire à semi-conducteur (2a), et
comparer, par un moyen de vérification (13), l'information de l'émetteur (4A) et l'information du titulaire (5A) lues et décodées dans lesdites étapes à l'information en rapport à l'émetteur (4) et l'information en rapport au titulaire (5) lues dans ladite étape de confrontation.
